# FASCICULE DE BREVET EUROPEEN

(11) **EP 4 045 374 B1**
(45) Date de publication et mention de la délivrance du brevet: **25.12.2024**
(21) Numéro de dépôt: 20785952.1
(22) Date de dépôt: 30.09.2020
(51) Int. Cl.: B60W 60/00, B60W 50/08

(54) **VÉHICULE ÉQUIPÉ D'UNE UNITÉ DE PILOTAGE DE MODE DE CONDUITE AUTONOME ET MANUEL**
FAHRZEUG MIT EINER EINHEIT ZUR STEUERUNG EINES MANUELLEN UND AUTONOMEN ANSTEUERUNGSMODUS
VEHICLE EQUIPPED WITH A UNIT FOR CONTROLLING MANUAL AND AUTONOMOUS DRIVING MODE

(30) Priorité: 15.10.2019 FR 1911499
(43) Date de publication de la demande: 24.08.2022
(73) Titulaire: Bluebus, 29500 Ergue Gaberic (FR)
(72) Inventeur: BARDOT, Christophe, 78180 MONTIGNY LE BRETONNEUX (FR); TOBO, François-Xavier, 78300 POISSY (FR)
(74) Mandataire: IPAZ
(86) Numéro de dépôt international: PCT/EP2020/077427
(87) Numéro de publication internationale: WO 2021/073878

(56) Documents cités:
- EP-A1- 3 745 378
- DE-A1- 102011 086 336
- US-A1- 2014 088 814
- US-A1- 2014 336 897
- US-A1- 2017 297 578
- US-A1- 2019 138 003

## Description

La présente invention concerne un véhicule équipé d'un mode de conduite autonome et d'un mode de conduite manuel.

Le domaine de l'invention est le domaine des véhicules équipés d'un mode de conduite autonome en plus d'un mode de conduite manuel.

### Etat de la technique

Un véhicule équipé d'un mode de conduite autonome, par exemple terrestre tel qu'une voiture ou un bus, est généralement également équipé d'un mode de conduite manuel.

Actuellement chaque activation du mode autonome nécessite l'allumage d'un système de conduite autonome. Similairement chaque désactivation du mode autonome pour passer en mode manuel nécessite d'éteindre ledit système de conduite autonome. Les documents US2019/138003A, DE102011086336A, US 2014/336897A et 2017/297578A décrivent différents exemples de tels véhicules.

Un tel véhicule présente donc l'inconvénient de devoir allumer, et donc calibrer, le système de conduite autonome à chaque activation du mode de conduite autonome.

Un but de la présente invention est de remédier à ces inconvénients.

Un autre but de l'invention est de proposer un véhicule dans lequel la cohabitation des modes de conduites manuel et autonome est améliorée.

Encore un autre but de l'invention est de proposer un véhicule dans lequel le niveau de sécurité du véhicule est augmenté.

### Exposé de l'invention

L'invention permet d'atteindre au moins l'un de ces buts par un véhicule selon la revendication 1.

La présente invention propose donc d'équiper un véhicule présentant un mode de conduite autonome et un mode de conduite manuel, d'une unité de pilotage desdits modes de conduite.

En mode de conduite manuel l'unité de pilotage inhibe les consignes de conduites émises sur le bus de communication numérique par le système de conduite autonome, sans inhiber les consignes de conduites émises par le poste de conduite manuelle. En mode de conduite autonome, l'unité de pilotage n'inhibe pas les consignes de conduites émises par le système de conduite autonome.

De plus, dans le mode de conduite autonome, l'unité de pilotage peut inhiber, ou ne pas inhiber, des consignes émises par le poste de conduite manuelle.

Ainsi, le véhicule selon l'invention permet une meilleure cohabitation des modes de conduites manuel et autonome. En effet, le véhicule permet une conduite manuelle du véhicule sans éteindre le système de conduite autonome. En mode de conduite manuelle le système de conduite autonome reste fonctionnel et continu d'émettre des consignes de conduite. Les modes de conduite cohabitent ainsi grâce à l'inhibition de ces consignes de conduite par l'unité de pilotage.

Le véhicule selon l'invention propose également un niveau de sécurité augmenté. En effet, le système de conduite autonome restant fonctionnel, il ne nécessite pas un temps d'allumage pour se calibrer. Le risque d'émission de consigne de conduite erroné est ainsi réduit.

Avantageusement, le système de conduite autonome du véhicule selon l'invention peut être configuré pour inscrire une donnée d'identification prédéterminée dans chacune des consignes de conduite qu'il émet, l'unité de pilotage de mode de conduite étant configurée pour émettre :
- une requête de prise en compte des consignes comportant ladite donnée d'identification, pour activer le mode conduite autonome ; et
- une requête de non-prise en compte des consignes comportant ladite donnée d'identification, pour désactiver le mode conduite autonome.

La présente invention propose donc que l'unité de pilotage inhibe les consignes de conduite émises par le système de conduite autonome via l'émission d'une requête de non-prise en compte de celles-ci. Pour ce faire le système de conduite autonome marque toutes les consignes de conduite qu'il émet, par l'inscription d'une donnée d'identification prédéterminée dans chacune de celles-ci.

Chaque organe de la base roulante du véhicule est ainsi capable d'identifier les consignes de conduites émanant du système de conduite autonome. Ainsi chaque organe peut choisir de prendre en compte ou non les consignes comportant la donnée d'identification lorsque l'unité de pilotage émet respectivement une requête de prise compte ou de non-prise en compte des consignes.

Ainsi, dans ce mode de réalisation, l'architecture du véhicule est simplifiée car le système de conduite autonome, respectivement l'unité de pilotage de mode de conduite, peut être connecté au bus de communication numérique, indépendamment de l'emplacement des autres composants connectés au bus. Cela simplifie en conséquence aussi son intégration au sein d'un véhicule existant par exemple.

Alternativement, le système de conduite autonome du véhicule selon l'invention peut être relié au bus de communication par l'intermédiaire de l'unité de pilotage de mode de conduite, ladite unité de pilotage de mode conduite étant configurée pour :
- autoriser le passage des consignes de conduites émises par ledit système de conduite autonome vers le bus de communication, pour activer le mode autonome ; et
- bloquer le passage des consignes de conduites émises par ledit système de conduite autonome vers le bus de communication, pour désactiver le mode autonome.

La présente invention propose donc que l'unité de pilotage puisse inhiber les consignes de conduite émises par le système de conduite autonome en bloquant le passage de celles-ci.

Pour ce faire l'unité de pilotage sert d'intermédiaire, ou de passerelle, entre le système de conduite autonome et le bus de communication. Toute consigne de conduite émise par le système de conduite autonome passe ainsi par l'unité de pilotage pour atteindre le bus de communication. En conséquence l'unité de pilotage peut autoriser ou bloquer le passage de consignes de conduites pour respectivement activer ou désactiver le mode de conduite autonome.

Ainsi le véhicule selon l'invention permet d'optimiser les informations circulant sur le bus de communication. La quantité d'information pouvant circuler sur ledit bus pouvant être limitée, il peut être important de limiter les informations, par exemples des consignes de conduite, circulant sur celui-ci.

Cette variante de réalisation de l'invention permet en outre une implémentation plus sécurisée de l'inhibition de consignes de conduite émises par le système de conduite autonome. En effet, dans cette variante de réalisation, chaque consigne de conduite émise par le système de conduite autonome est bloquée par l'unité de pilotage et ne passe pas dans le bus de communication. De ce fait, il n'existe pas de risque de prise en compte accidentelle, par un organe du véhicule, d'une consigne de conduite émise par le système de conduite autonome lorsque le véhicule est en mode de conduite manuel.

Avantageusement, le véhicule selon l'invention peut comprendre un sélecteur manuel de mode de conduite, l'unité de pilotage de mode de conduite étant configurée pour activer ou désactiver le mode de conduite autonome en fonction de l'état dudit sélecteur.

La présente invention propose donc de permettre au conducteur d'activer ou désactiver manuellement le mode de conduite à l'aide d'un sélecteur, de préférence disposé au sein du poste de conduite manuelle.

Ainsi le véhicule selon l'invention permet un meilleur contrôle par le conducteur du mode de conduite au sein du véhicule, ce dernier ne pouvant jamais changer de mode de conduite sans intervention du conducteur.

Avantageusement, l'unité de pilotage peut être configurée pour désactiver le mode de conduite autonome en cas de détection d'au moins une des conditions suivantes :
- application d'un effort, supérieur à un seuil prédéterminé, à un volant dudit véhicule ;
- application d'un freinage à une pédale de frein dudit véhicule ;
- activation d'un frein de parc dudit véhicule ; et
- non-détection de présence sur un siège conducteur.

La présente invention propose donc de désactiver le mode de conduite autonome lorsque certains évènements sont détectés et permet, par exemple, de désactiver le mode de conduite autonome et d'activer le mode de conduite manuel et/ou d'arrêter le véhicule.

Lors d'une détection de l'application d'un effort sur le volant dudit véhicule, l'unité de conduite désactive le mode de conduite autonome et, de préférence, active le mode de conduite manuel. L'effort doit être supérieur à un seuil prédéterminé afin d'éviter une désactivation accidentelle.

Lors d'une détection d'un freinage via une pédale de frein et/ou l'activation d'un frein de parc du véhicule, l'unité de conduite désactive le mode de conduite autonome et, de préférence, active le mode de conduite manuel.

Lors d'une non-détection de présence sur un siège conducteur, l'unité de conduite désactive le mode de conduite autonome et, de préférence, arrête le véhicule.

Le véhicule selon l'invention permet ainsi d'augmenter le niveau de sécurité en permettant au conducteur de prendre le contrôle du véhicule rapidement.

La désactivation du mode de conduite autonome est réalisée par inhibition des consignes émises par le système de conduite autonome, selon l'un quelconque des modes de réalisation décrits plus haut.

Avantageusement, l'unité de pilotage de mode de conduite du véhicule selon l'invention peut être configurée pour activer le mode de conduite autonome en cas de détection de toutes les conditions suivantes :
- vitesse véhicule nulle ;
- détection de présence sur un siège conducteur ;
- frein de parc dudit véhicule activé ; et
- sélecteur de mode de conduite positionné sur mode de conduite autonome.

La présente invention propose donc ne pouvoir activer le mode de conduite autonome que si certaines conditions de sécurité sont remplies. En effet, l'unité de contrôle vérifie que le véhicule est stationné en contrôlant que la vitesse du véhicule est nulle et que le frein de parc du véhicule est activé. L'unité vérifie de plus qu'un conducteur est bien présent sur le siège conducteur et que le sélecteur de mode de conduite est bien positionné sur mode de conduite autonome avant de pouvoir activer le mode de conduite autonome.

Le véhicule selon l'invention permet ainsi d'augmenter le niveau de sécurité en limitant les risques d'une activation accidentelle du mode de conduite autonome.

L'activation du mode de conduite autonome peut être réalisée par l'arrêt de l'inhibition des consignes de conduites émises par le système de conduite manuelle. En fonction du mode de réalisation choisi, l'arrêt de cette inhibition peut être réalisé :
- soit par émission, dans le bus de communication, par l'unité de pilotage, d'une requête de prise en compte (ou de fin de non prise en compte) des consignes comportant la donnée d'identification inscrite par le système de conduite autonome ;
- soit en autorisant le passage des consignes de conduites émises par le système de conduite autonome vers le bus de communication.

Avantageusement, le véhicule selon l'invention peut comprendre une interface de connexion, en particulier de manière amovible, d'un appareil de conduite manuel, de type manette ou joystick, au bus de communication dudit véhicule, pour conduire ledit véhicule dans un mode de conduite, dit déporté ; l'unité de pilotage de mode de conduite étant en outre configurée pour inhiber les consignes de conduite émises par ledit appareil de conduite manuel, en mode de conduite manuel ou en mode de conduite autonome.

La présente invention propose donc de permettre de conduire le véhicule via un appareil de conduite manuel amovible dans un mode de conduite déporté.

L'inhibition des consignes de conduite émises par ledit appareil de conduite manuel peut être réalisée de manière similaire à l'inhibition des consignes de conduite émises par le système de conduite autonome, tel que décrite plus haut.

En particulier, l'inhibition des consignes de conduite émises par ledit appareil de conduite manuel peut être réalisée :
- soit par une requête de non-prise en compte des consignes émises par ledit appareil, émise par l'unité de pilotage : dans ce cas, ces consignes peuvent être identifiées par une donnée d'identification inscrite dans lesdites consignes par ledit appareil ;
- soit en bloquant le passage des consignes émises par ledit appareil, sur le bus de communication : dans ce cas, l'unité de pilotage est positionné entre ledit appareil et le bus de communication.

Bien entendu, en mode de conduite déporté, les consignes de conduite de l'appareil de conduite amovible ne sont pas inhibées par l'unité de contrôle.

Avantageusement, le véhicule selon l'invention peut comprendre un commutateur manuel pour sélectionner, ou non, le mode de conduite déporté, l'unité de pilotage de mode de conduite étant configurée pour activer ou désactiver le mode de conduite déporté en fonction de l'état dudit commutateur.

La présente invention propose donc de permettre au conducteur de choisir manuellement le mode de conduite à l'aide d'un commutateur, de préférence disposé au sein du poste de conduite manuelle.

Ainsi le véhicule selon l'invention permet un meilleur contrôle par le conducteur du mode de conduite sélectionné, augmentant ainsi la sécurité du véhicule.

Avantageusement, l'unité de pilotage de mode de conduite du véhicule selon l'invention peut être configurée pour activer le mode de conduite déporté lorsque :
- le mode de conduite autonome est actif, et
- le commutateur manuel est en position mode de conduite déporté.

Autrement dit, le passage vers le mode de conduite déporté ne peut se faire qu'à partir du mode de conduite autonome.

Suivant une définition générale, le véhicule selon l'invention peut être un véhicule comportant au moins quatre roues et servant au transport de passagers ou de marchandises.

En particulier, le véhicule selon l'invention peut être un véhicule terrestre de transport en commun de personnes.

Le véhicule selon l'invention peut être un véhicule lourd, c'est-à-dire un véhicule terrestre de plus de 3,5 tonnes de poids total autorisé en charge (PTAC).

Avantageusement, le véhicule selon l'invention peut être un véhicule terrestre de transport en commun, de type bus ou car.

Le véhicule selon l'invention peut être un véhicule électrique.

Selon un autre aspect de l'invention, il est proposé un procédé selon la revendication 11.

Avantageusement, l'inhibition des consignes de conduite émises par le système de conduite autonome peut être réalisée par :
- blocage du passage desdites consignes vers un bus de communication du véhicule ; et
- l'émission d'une requête de non-prise en compte desdites consignes, lesdites consignes comportant une donnée d'identification permettant de les identifier.

Avantageusement, le véhicule selon l'invention peut en outre être conduit, dans un mode de conduite, dit déporté, par un appareil de conduite relié, en particulier de manière amovible, au bus de communication dudit véhicule grâce à une interface de connexion dudit véhicule, le procédé selon l'invention peut en outre comprendre une inhibition, par l'unité de pilotage de mode de conduite, des consignes de conduite émises par ledit appareil de conduite déporté, en mode de conduite manuel ou en mode de conduite autonome.

La présente invention propose donc de permettre de conduire le véhicule via un appareil de conduite manuel amovible dans un mode de conduite déporté. L'inhibition des consignes de conduites de l'appareil de conduite peut être réalisée par l'envoie d'une requête de non-prise en compte de ces consignes, ou par blocage du passage de ces consignes vers le bus de communication, via l'unité de pilotage. Autrement dit ces consignes de conduites peuvent être inhibées similairement à celles émises par le système de conduite autonome lorsque le véhicule est en mode de conduite manuel.

En mode de conduite déporté, les consignes de conduite de l'appareil de conduite amovible ne sont pas inhibées.

### Description des figures et modes de réalisation

D'autres avantages et caractéristiques apparaîtront à l'examen de la description détaillée d'un mode de réalisation nullement limitatif, et des dessins annexés sur lesquels
- la FIGURE 1 est une représentation schématique et partielle d'un exemple de réalisation non limitatif d'un véhicule selon l'invention ;
- la FIGURE 2 est une représentation schématique et partielle d'un autre exemple de réalisation non limitatif d'un véhicule selon l'invention ;
- la FIGURE 3 est une représentation schématique et partielle d'un autre exemple de réalisation non limitatif d'un véhicule selon l'invention ;
- la FIGURE 4 est une représentation schématique d'un exemple de réalisation non limitatif d'un véhicule ; et
- la FIGURE 5 est un diagramme en bloc illustrant un exemple de réalisation non limitatif d'une procédure de démarrage de mode de conduite autonome et manuelle selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

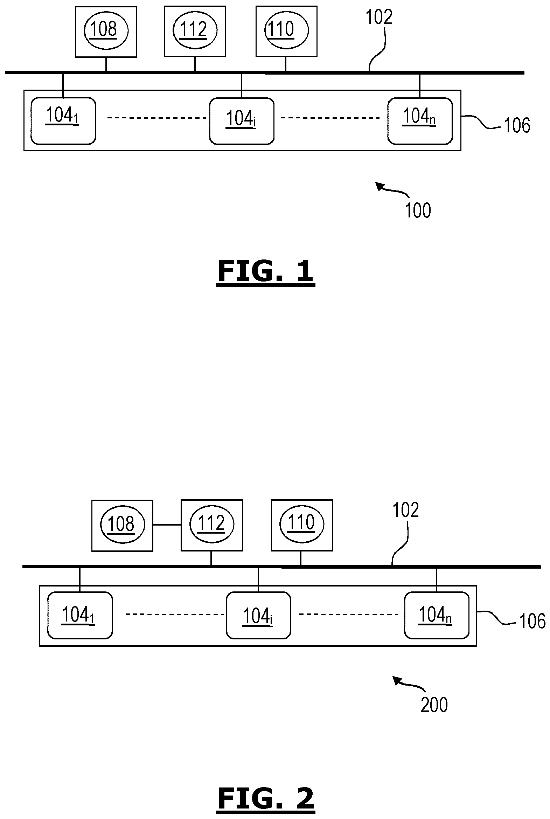

La FIGURE 1 est une représentation schématique et partielle d'un exemple de réalisation non limitatif d'un véhicule selon l'invention.

Le véhicule 100, représenté sur la figure 1, est un véhicule équipé d'un mode de conduite autonome et d'un mode de conduite manuel.

Le véhicule 100 comprend un bus de communication numérique 102. Le véhicule comprend des organes 104₁-104ₙ, d'une base roulante 106 dudit véhicule 100, connecté au bus de communication 102. Dans la suite les références 104, 104ᵢ peuvent aussi être utilisés pour désigner les organes de la base roulante 106.

Chaque organe 104ᵢ est équipé d'un moyen, tel qu'un processeur ou un calculateur, pour interpréter une consigne de conduite injectée dans le bus de communication.

Le véhicule 100 comprend en outre un système, embarqué, de conduite autonome 108, un poste de conduite manuelle 110 et une unité 112 de pilotage de mode de conduite, indépendamment connectés au bus de communication 102.

Le bus de communication numérique 102, par exemple un bus de données CAN, permet ainsi le transfert de données, par exemple des consignes de conduite, entre les différents éléments qui lui sont connectés.

Les organes 104₁-104ₙ peuvent être, à titre d'exemples non limitatifs, un organe de frein, un organe de direction, un organe de propulsion de type moteur électrique, de stabilisation de type amortisseur par exemple, une ou plusieurs batteries, en particulier rechargeables, un organe d'interface homme-machine (IDH), un système d'aide à l'exploitation (SAE) ou un système de gestion de flotte (FMS de l'anglais fleet management system).

Le système de conduite autonome 108 et le poste de conduite manuelle 110 peuvent envoyer des consignes conduites aux différents organes 104₁-104ₙ de la base roulante 106 via le bus 102.

L'unité de pilotage de mode de conduite 112 peut être, par exemple, un calculateur. L'unité de pilotage 112 permet la gestion des modes de conduite et améliore ainsi leur cohabitation au sein du véhicule 100.

En mode de conduite manuel l'unité de pilotage 112 inhibe les consignes de conduites émises sur le bus de communication numérique 102, par le système de conduite autonome 108, sans inhiber les consignes de conduites émise par le poste de conduite manuelle 110. En mode de conduite autonome, l'unité de pilotage 112 n'inhibe pas les consignes de conduites émises par le système de conduite autonome 108. De plus, en mode de conduite autonome, l'unité de pilotage 112 peut inhiber, ou ne pas inhiber, d'éventuelles consignes émises par le poste de conduite manuelle 110.

Selon le mode de réalisation illustré en FIGURE 1, l'unité de pilotage 112 est agencée pour inhiber les consignes de conduite émises par le système de conduite autonome 108 via l'émission d'une requête de non-prise en compte de celles-ci, sur le bus de communication 102.

Dans ce mode de réalisation, le système de conduite autonome 108 marque toutes les consignes de conduite qu'il émet, par une donnée d'identification prédéterminée, par exemple en inscrivant ladite donnée d'identification prédéterminée dans chacune de celles-ci. Cette donnée d'identification peut être un identifiant du système de conduite autonome 108, ou un code associé au mode de conduite autonome, etc.

Chaque organe 104ᵢ de la base roulante 106 du véhicule 100 est ainsi capable d'identifier les consignes de conduites émanant du système de conduite autonome 108 et circulant sur le bus de communication 102. Ainsi, chaque organe 104 peut choisir de prendre en compte les consignes comportant la donnée d'identification lorsque l'unité de pilotage 112 émet une requête de prise compte des consignes. Inversement chaque organe peut aussi choisir de ne pas prendre en compte les consignes comportant la donnée d'identification lorsque l'unité de pilotage 112 émet une requête de non-prise compte des consignes.

La FIGURE 2 est une représentation schématique et partielle d'un deuxième exemple de réalisation, non limitatif, d'un véhicule selon l'invention.

Le véhicule 200 de la FIGURE 2 comprend tous les éléments du véhicule 100 de la FIGURE 1.

Le véhicule 200 de la FIGURE 2 diffère du véhicule 100 de la FIGURE 1 en ce que le système de conduite autonome 108 du véhicule 200 est relié au bus de communication par l'intermédiaire de l'unité de pilotage 112 de mode de conduite. Autrement dit, l'unité de pilotage 112 constitue une passerelle entre le système de conduite autonome 108 et le bus de communication.

Dans le véhicule 200 illustré en FIGURE 2, l'unité de pilotage 112 peut inhiber les consignes de conduite émises par le système de conduite autonome 108 en bloquant le passage de celles-ci vers le bus de communication. En effet, toute consigne de conduite émise par le système de conduite autonome 108 doit passer par l'unité de pilotage pour atteindre le bus de communication 102. En conséquence l'unité de pilotage 112 peut autoriser, ou bloquer, le passage des consignes de conduites pour respectivement activer ou désactiver le mode de conduite autonome.

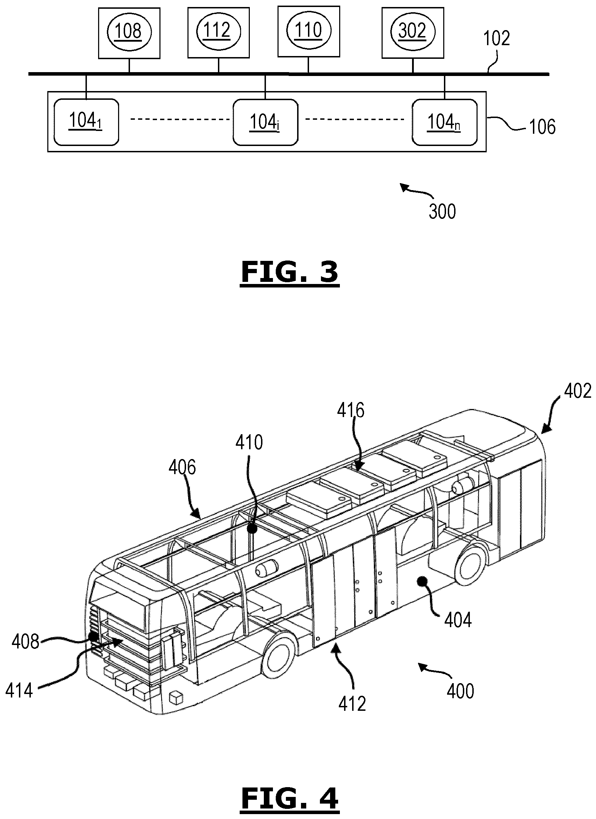

La FIGURE 3 est une représentation schématique et partielle d'encore un autre exemple de réalisation non limitatif d'un véhicule selon l'invention.

Le véhicule 300 de la FIGURE 3 comprend tous les éléments du véhicule 100 de la FIGURE 1.

Le véhicule 300 de la FIGURE 3 diffère du véhicule 100 de la FIGURE 1 en ce que le véhicule 300 comprend en outre un appareil de conduite manuel 302 reliée au bus de communication au travers d'une interface de connexion, préférentiellement amovible.

L'appareil de conduite manuel 302 peut être de type manette ou joystick. Cet appareil de conduite manuel permet de conduire le véhicule 300 dans un mode de conduite, dit déporté, en transmettant des consignes de conduite aux organes 104 de la base roulante 106 dudit véhicule 300.

Dans le véhicule 300 de la FIGURE 3, l'unité de pilotage 112 de mode de conduite est en outre configurée pour inhiber les consignes de conduite émises par l'appareil de conduite manuel 302, lorsque le véhicule est en mode de conduite manuel ou en mode de conduite autonome.

En mode de conduite déporté, les consignes de conduite émises par l'appareil de conduite manuel 302 ne sont pas inhibées par l'unité de de pilotage 112.

Dans le véhicule 300, l'unité de pilotage 112 est agencée pour inhiber les consignes de conduite émises par l'appareil de conduite manuel 302 via l'émission d'une requête de non-prise en compte de celles-ci, sur le bus de communication 102. Dans ce mode de réalisation, l'appareil 302 marque toutes les consignes de conduite qu'il émet, par une donnée d'identification prédéterminée, par exemple en inscrivant ladite donnée d'identification prédéterminée dans chacune de celles-ci. Cette donnée d'identification peut être un identifiant du système de conduite autonome 108, ou un code associé au mode de conduite autonome, etc.

Alternativement à ce qui représenté sur la FIGURE 3, l'appareil de conduite manuel 302 peut être relié au bus de communication 102 par l'intermédiaire de l'unité de pilotage 112, ce dernier constituant alors une passerelle entre ledit appareil 302 et le bus de communication 102. Dans ce cas, l'unité de pilotage 112 peut inhiber les consignes de conduite émises par l'appareil de conduite manuel 302 en bloquant le passage de ces consignes sur le bus de communication 102.

De plus, l'appareil de conduite manuel 302 peut comporter un moyen de détection de la présence de l'utilisateur, aussi appelé « homme mort », par exemple sous la forme d'un bouton ou d'une combinaison de bouton.

La FIGURE 4 est une représentation schématique d'un autre exemple de réalisation non limitatif d'un véhicule.

Le véhicule 400, représenté sur la FIGURE 4, est un véhicule de transport 400 en commun, plus précisément un bus électrique comprenant un habitacle délimité par une paroi avant 402, deux parois latérales longitudinales 404 et 406, une paroi arrière 408, une paroi supérieure 410 et une paroi inférieure 412.

Le bus électrique 400 comporte un ou plusieurs moteurs électriques (non représentés), un ou plusieurs modules 414, dits arrière, de stockage d'énergie électrique, disposés du côté de la paroi arrière 408. Le bus 400 comprend en outre un ou plusieurs modules 416, dits supérieurs, de stockage d'énergie électrique, disposés dans un logement aménagé dans la paroi supérieure 410 du bus 400.

Le bus électrique 400 est mis en mouvement exclusivement par l'énergie électrique fournie par les modules de stockage d'énergie électrique 414 et 416, qui peuvent être des batteries ou des supercapacités.

Les modules de stockage d'énergie électrique 414 et 416 sont rechargés depuis une source électrique externe, par l'intermédiaire d'un câble de rechargement, comprenant éventuellement un fil pilote.

Le bus électrique 400 peut être l'un quelconque des véhicules 100,200 et 300 représentés sur les FIGURES 1 à 3.

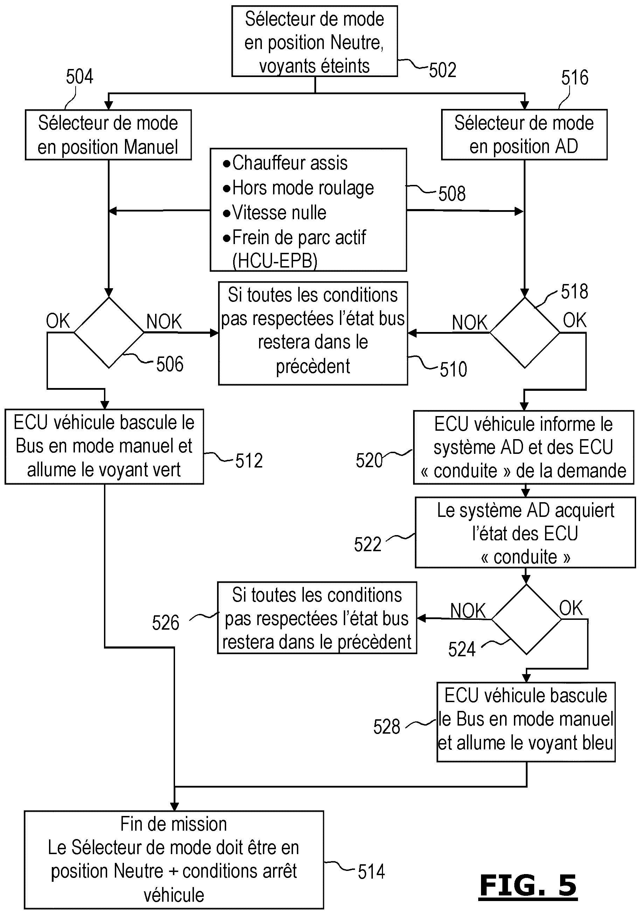

La FIGURE 5 est un diagramme en bloc illustrant un exemple de réalisation non limitatif d'une procédure de démarrage de mode de conduite manuelle ou autonome d'un véhicule selon l'invention.

L'exemple de procédure de démarrage illustrée en figure 5 est implémenté dans un véhicule selon l'invention, équipé d'un sélecteur manuel de mode conduite. Ce véhicule, par exemple de type bus, est muni d'un ensemble de voyants indiquant le mode de conduite activé par une couleur qui lui est propre. Cet ensemble de voyants peut par exemple prendre la forme d'une colonne et être disposé dans l'habitacle du véhicule, à l'avant et/ou à l'arrière.

Lors d'une première étape, bloc 502, le sélecteur manuel de mode conduite est en position neutre et les voyants sont éteints. Le conducteur vient ensuite changer la position du sélecteur manuel de mode de conduite.

Pour démarrer le véhicule en mode de conduite manuel, le conducteur met le sélecteur de mode en position manuel lors d'une étape 504. Ensuite, lors d'une étape de vérification 506, une unité de commande électronique ECU (de l'anglais Electronic Control Unit) vient contrôler si les conditions de démarrage de la liste 508 sont respectées. L'unité de commande électronique vient ainsi vérifier :
- qu'un chauffeur est assis, par exemple à l'aide d'un capteur de présence ;
- que le véhicule est hors mode roulage, c'est-à-dire qu'un mode de conduite autonome ou manuelle n'est pas déjà été activé ;
- que la vitesse est nulle, c'est-à-dire que le véhicule est à l'arrêt ;
- que le frein de parc est actif, le frein de parc pouvant par exemple être un frein de stationnement électrique EPB (de l'anglais Electric Park Brake) ou une manette de frein de parking HCU (de l'anglais Hand Control Unit).

Si l'unité de commande électronique détermine qu'au moins une de ces conditions n'est pas remplie, sorti NOK de l'étape de vérification 506, le mode de conduite du véhicule reste dans l'état précédent, étape 510. Le véhicule reste ainsi en mode neutre.

Si l'unité de commande électronique détermine que toutes les conditions sont remplies, sorti OK du bloc 506, l'unité de commande électronique du véhicule bascule le mode de conduite en mode manuel et allume un voyant vert, lors d'une étape 512.

Lors d'une étape 514, afin de stationner le véhicule en fin de mission, le sélecteur doit être mis en position neutre et des conditions d'arrêt prédéfinies doivent être remplies.

Alternativement, pour démarrer le véhicule en mode de conduite autonome depuis une position neutre, le conducteur met le sélecteur de mode en position autonome lors d'une étape 516. Ensuite, lors d'une étape de vérification 518, l'unité de commande électronique vient contrôler si les conditions de démarrage de la liste 508 sont respectées.

Si l'unité de commande électronique détermine qu'au moins une de ces conditions n'est pas remplie, sortie NOK de l'étape 518, le mode de conduite du véhicule reste dans l'état précédent, étape 510.

Si l'unité de commande électronique détermine que toutes les conditions sont remplies, sorti OK de l'étape 518, l'unité de commande électronique du véhicule informe, lors d'une étape 520, le système de conduite autonome AD (de l'anglais Autonomous Driving) ainsi que d'unités de commande électronique de « conduite » de la demande de démarrage du mode de conduite autonome. Lors d'une étape suivante 522, le système de conduite autonome acquiert l'état des unités de commande électroniques de « conduite ». Il est ensuite possible, lors d'une étape optionnelle 524 d'effectuer divers contrôles relatifs à l'état des unités de commande électronique de « conduite ».

Si ces contrôles ne sont pas concluants, sortie NOK de l'étape 524, l'état du véhicule reste à l'état précédent.

Si ces contrôles sont concluants, sortie OK de l'étape 524, l'unité de commande électronique du véhicule bascule le mode de conduite en mode manuel et allume un voyant vert, lors d'une étape 528.

En l'absence de l'étape optionnelle 524, la procédure de démarrage du véhicule en mode de conduite autonome passe directement de l'étape 522 à l'étape 528.

Lors d'une dernière étape 514, afin de stationner le véhicule en fin de mission, le sélecteur doit être mis en position neutre et des conditions d'arrêt préalablement définies doivent être remplies.

Bien entendu, l'invention n'est pas limitée aux exemples détaillés ci-dessus, notamment la longueur du bus, le nombre et la position des modules peuvent être différents de ceux donnés dans les exemples précités.

## Revendications

1. Véhicule (100;200;300) comprenant :
- un poste de conduite manuelle (110) par un conducteur,
- un système, embarqué, de conduite autonome (108) dans un mode de conduite autonome, par émission de consignes de conduites, vers au moins un organe (104₁-104ₙ) d'une base roulante (106) dudit véhicule, au travers d'un bus de communication numérique (102), ledit système de conduite autonome (108) restant fonctionnel et continuant d'émettre des consignes de conduite en mode de conduite manuel, et
- une unité de pilotage (112) de mode de conduite ;
**caractérisé en ce que** ladite unité de pilotage (112) de mode de conduite est configurée pour inhiber les consignes de conduite émises par ledit système de conduite autonome (108), en mode de conduite manuel.

2. Véhicule (100;300) selon la revendication 1, **caractérisé en ce que** le système de conduite autonome (108) est configuré pour inscrire une donnée d'identification prédéterminée dans chacune des consignes de conduite qu'il émet, l'unité de pilotage (112) de mode de conduite étant configurée pour émettre :
- une requête de prise en compte des consignes comportant ladite donnée d'identification, pour activer le mode conduite autonome ; et
- une requête de non-prise en compte des consignes comportant ladite donnée d'identification, pour désactiver le mode conduite autonome.

3. Véhicule (200) selon la revendication 1, **caractérisé en ce que** le système de conduite autonome (108) est relié au bus de communication (102) par l'intermédiaire de l'unité de pilotage (112) de mode de conduite, ladite unité de pilotage de mode conduite étant configurée pour :
- autoriser le passage des consignes de conduites émises par ledit système de conduite autonome (108) vers le bus de communication (102), pour activer le mode autonome ; et
- bloquer le passage des consignes de conduites émises par ledit système de conduite autonome (108) vers le bus de communication (102), pour désactiver le mode autonome.

4. Véhicule (100;200;300) selon l'une quelconque des revendications précédente, **caractérisé en ce qu'**il comprend un sélecteur manuel de mode de conduite, l'unité de pilotage (112) de mode de conduite étant configurée pour activer ou désactiver le mode de conduite autonome en fonction de l'état dudit sélecteur.

5. Véhicule (100;200;300) selon l'une quelconque des revendications précédentes, **caractérisé en ce que** l'unité de pilotage (112) de mode de conduite est configurée pour désactiver le mode de conduite autonome en cas de détection d'au moins une des conditions suivantes :
- application d'un effort, supérieur à un seuil prédéterminé, à un volant dudit véhicule ;
- application d'un freinage à une pédale de frein dudit véhicule ;
- activation d'un frein de parc dudit véhicule ; et
- non-détection de présence sur un siège conducteur.

6. Véhicule (100;200;300) selon la revendication 4, **caractérisé en ce que** l'unité de pilotage (112) de mode de conduite est configurée pour activer le mode de conduite autonome en cas de détection de toutes les conditions suivantes :
- vitesse véhicule nulle ;
- détection de présence sur un siège conducteur ;
- frein de parc dudit véhicule activé ; et
- sélecteur de mode de conduite positionné sur mode de conduite autonome.

7. Véhicule (300) selon l'une quelconque des revendications précédentes, **caractérisé en ce qu'**il comprend une interface de connexion (302), d'un appareil de conduite manuel, de type manette ou joystick, au bus de communication (102) dudit véhicule (300), pour conduire ledit véhicule dans un mode de conduite, dit déporté ;
l'unité de pilotage (112) de mode de conduite étant en outre configurée pour inhiber les consignes de conduite émises par ledit appareil de conduite manuel, en mode de conduite manuel ou en mode de conduite autonome.

8. Véhicule (300) selon la revendication 7, **caractérisé en ce qu'**il comprend un commutateur manuel pour sélectionner, ou non, le mode de conduite déporté, l'unité de pilotage (112) de mode de conduite étant configurée pour activer ou désactiver le mode de conduite déporté en fonction de l'état dudit commutateur.

9. Véhicule (300) selon la revendication 8, **caractérisé en ce que** l'unité de pilotage (112) de mode de conduite étant configurée pour activer le mode de conduite déporté lorsque :
- le mode de conduite autonome est actif, et
- le commutateur manuel est en position mode de conduite déporté.

10. Véhicule (100;200;300) selon l'une quelconque des revendications précédentes, **caractérisé en ce qu'**il s'agit d'un véhicule terrestre de transport en commun, de type bus ou car, en particulier électrique.

11. Procédé de gestion de mode de conduite au sein d'un véhicule (100; 200;300) pouvant être sélectivement conduit dans :
- un mode de conduite manuel par un conducteur,
- un mode de conduite autonome par un système embarqué de conduite autonome (108) émettant des consignes de conduites, vers au moins un organe (104) d'une base roulante (106) dudit véhicule (100;200;300), au travers d'un bus de communication numérique (102), ledit système de conduite autonome (108) restant fonctionnel et continuant d'émettre des consignes de conduite en mode de conduite manuel, et
**caractérisé en ce que** ledit procédé comprend une inhibition, par une unité de pilotage (112) de mode de conduite, des consignes de conduite émises par ledit système de conduite autonome (108), en mode de conduite manuel.

12. Procédé selon la revendication précédente, **caractérisé en ce que** l'inhibition des consignes de conduite émises par le système de conduite autonome (108) peut être réalisée par :
- blocage du passage desdites consignes vers un bus de communication (102) du véhicule (200) ; et
- l'émission d'une requête de non-prise en compte desdites consignes, lesdites consignes comportant une donnée d'identification permettant de les identifier.

13. Procédé selon l'une quelconque des revendications 11 ou 12, **caractérisé en ce que** ledit véhicule (300) peut en outre être conduit, dans un mode de conduite, dit déporté, par un appareil de conduite relié, en particulier de manière amovible, au bus de communication (102) dudit véhicule (300) grâce à une interface de connexion (302) dudit véhicule, ledit procédé comprenant en outre une inhibition, par l'unité de pilotage (112) de mode de conduite, des consignes de conduite émises par ledit appareil de conduite déporté, en mode de conduite manuel ou en mode de conduite autonome.

## Patentansprüche

1. Fahrzeug (100;200;300), umfassend:
- eine manuelle Fahrstellung (110) durch einen Fahrer,
- ein integriertes autonomes Fahrsystem (108) in einem autonomen Fahrmodus, durch Ausgeben von Fahranweisungen an mindestens ein Organ (104₁-104ₙ) einer rollenden Basis (106) des Fahrzeugs über einen digitalen Kommunikationsbus (102), wobei das autonome Fahrsystem (108) funktionsfähig bleibt und weiter Fahranweisungen in dem manuellen Fahrmodus ausgibt, und
- eine Fahrmodussteuereinheit (112);
**dadurch gekennzeichnet, dass** die Fahrmodussteuereinheit (112) konfiguriert ist, um die Fahranweisungen, die durch das autonome Fahrsystem (108) ausgegeben werden, in dem manuellen Fahrmodus zu unterbinden.

2. Fahrzeug (100;300) nach Anspruch 1, **dadurch gekennzeichnet, dass** das autonome Fahrsystem (108) konfiguriert ist, um in jede der von ihm ausgegebenen Fahranweisungen vorbestimmte Identifikationsdaten zu schreiben, wobei die Fahrmodussteuereinheit (112) konfiguriert ist, um Folgendes auszugeben:
- eine Aufforderung, die Anweisungen, die die Identifikationsdaten aufweisen, zu berücksichtigen, um den autonomen Fahrmodus zu aktivieren; und
- eine Aufforderung, die Anweisungen, die die Identifikationsdaten aufweisen, nicht zu berücksichtigen, um den autonomen Fahrmodus zu deaktivieren.

3. Fahrzeug (200) nach Anspruch 1, **dadurch gekennzeichnet, dass** das autonome Fahrsystem (108) über die Fahrmodussteuereinheit (112) mit dem Kommunikationsbus (102) verbunden ist, wobei die Fahrmodussteuereinheit konfiguriert ist zum:
- Autorisieren der Weitergabe der durch das autonome Fahrsystem (108) ausgegebenen Fahranweisungen an den Kommunikationsbus (102), um den autonomen Modus zu aktivieren; und
- Blocken der Weitergabe der durch das autonome Fahrsystem (108) ausgegebenen Fahranweisungen an den Kommunikationsbus (102), um den autonomen Modus zu deaktivieren.

4. Fahrzeug (100;200;300) nach einem der vorstehenden Ansprüche, **dadurch gekennzeichnet, dass** es einen manuellen Fahrmoduswähler umfasst, wobei die Fahrmodussteuereinheit (112) konfiguriert ist, um den autonomen Fahrmodus abhängig von dem Wählerzustand zu aktivieren oder deaktivieren.

5. Fahrzeug (100;200;300) nach einem der vorstehenden Ansprüche, **dadurch gekennzeichnet, dass** die Fahrmodussteuereinheit (112) konfiguriert ist, um den autonomen Fahrmodus bei Erkennung mindestens einer der folgenden Bedingungen zu deaktivieren:
- Ausüben einer Kraft, die größer als ein vorbestimmter Schwellenwert ist, auf ein Lenkrad des Fahrzeugs;
- Ausüben einer Bremswirkung auf ein Bremspedal des Fahrzeugs;
- Aktivieren einer Feststellbremse des Fahrzeugs; und
- Nichterkennen von Anwesenheit auf einem Fahrersitz.

6. Fahrzeug (100;200;300) nach Anspruch 4,
**dadurch gekennzeichnet, dass** die Fahrmodussteuereinheit (112) konfiguriert ist, um den autonomen Fahrmodus bei Erkennung sämtlicher der folgenden Bedingungen zu aktivieren:
- Fahrzeuggeschwindigkeit null;
- Erkennen von Anwesenheit auf einem Fahrersitz;
- aktivierte Feststellbremse des Fahrzeugs; und
- Fahrmoduswähler positioniert auf dem autonomen Fahrmodus.

7. Fahrzeug (300) nach einem der vorstehenden Ansprüche,
**dadurch gekennzeichnet, dass** es eine Schnittstelle (302) für eine Verbindung einer manuellen Fahrtvorrichtung einer Steuerhebel- oder Joystickart mit dem Kommunikationsbus (102) des Fahrzeugs (300) umfasst, um das Fahrzeug in einem Fahrmodus, der als versetzt bezeichnet wird, zu fahren;
wobei die Fahrmodussteuereinheit (112) ferner konfiguriert ist, um die durch die manuelle Fahrvorrichtung übermittelten Fahranweisungen in dem manuellen Fahrmodus oder in dem autonomen Fahrmodus zu unterbinden.

8. Fahrzeug (300) nach Anspruch 7, **dadurch gekennzeichnet, dass** es einen manuellen Schalter zum Wählen oder Nichtwählen des versetzten Fahrmodus, wobei die Fahrmodussteuereinheit (112) konfiguriert ist, um den versetzten Fahrmodus abhängig von dem Zustand des Schalters zu aktivieren oder deaktivieren.

9. Fahrzeug (300) nach Anspruch 8, **dadurch gekennzeichnet, dass** die Fahrmodussteuereinheit (112) konfiguriert ist, um den versetzten Fahrmodus zu aktivieren, wenn:
- der autonome Fahrmodus aktiv ist und
- der manuelle Schalter sich in der Position des versetzten Fahrmodus befindet.

10. Fahrzeug (100;200;300) nach einem der vorstehenden Ansprüche, **dadurch gekennzeichnet, dass** es sich um ein, insbesondere elektrisches, öffentliches Landverkehrsfahrzeug einer Bus- oder Reisebusart handelt.

11. Verfahren zum Steuern des Fahrmodus innerhalb eines Fahrzeugs (100;200;300), das selektiv gefahren werden kann in:
- einem manuellen Fahrmodus durch einen Fahrer,
- einem autonomen Fahrmodus durch ein integriertes autonomes Fahrsystem (108), das Fahranweisungen über einen digitalen Kommunikationsbus (102) an mindestens ein Organ (104) einer rollenden Basis (106) des Fahrzeugs (100;200;300) ausgibt, wobei das autonome Fahrsystem (108) funktionsfähig bleibt und weiter Fahranweisungen in dem manuellen Fahrmodus ausgibt, und
**dadurch gekennzeichnet, dass** das Verfahren eine Unterbindung, durch eine Fahrmodussteuereinheit (112), von Fahranweisungen, die durch das autonome Fahrsystem (108) in dem manuellen Fahrmodus ausgegeben werden, umfasst.

12. Verfahren nach dem vorstehenden Anspruch,
**dadurch gekennzeichnet, dass** die Unterbindung der durch das autonome Fahrsystem (108) ausgegebenen Fahranweisungen erreicht werden kann durch:
- Blockieren der Weitergabe der Anweisungen an einen Kommunikationsbus (102) des Fahrzeugs (200); und
- Ausgeben einer Aufforderung, die Anweisungen nicht zu berücksichtigen, wobei die Anweisungen Identifikationsdaten aufweisen, die ihre Identifizierung ermöglichen.

13. Verfahren nach einem der Ansprüche 11 oder 12,
**dadurch gekennzeichnet, dass** das Fahrzeug (300) ferner in einem Fahrmodus, der als versetzt bezeichnet wird, durch eine Fahrvorrichtung gefahren werden kann, die mittels einer Verbindungsschnittstelle (302) des Fahrzeugs mit dem Kommunikationsbus (102) des Fahrzeugs (300), insbesondere abnehmbar, verbunden ist, wobei das Verfahren ferner eine Unterdrückung, durch die Fahrmodussteuereinheit (112), der durch die versetzte Fahrvorrichtung ausgegebenen Fahranweisungen in dem manuellen Fahrmodus oder in dem autonomen Fahrmodus umfasst.

## Claims

1. Vehicle (100; 200; 300) comprising:
- a station (110) for manual driving by a driver,
- an on-board system (108) for autonomous driving in an autonomous driving mode, by sending driving instructions to at least one component (104₁-104ₙ) of a rolling base (106) of said vehicle, via a digital communication bus (102), said autonomous driving system (108) remaining functional and continuing to send driving instructions in manual driving mode, and
- a driving mode control unit (112);
**characterized in that** said driving mode control unit (112) is configured to inhibit the driving instructions sent by said autonomous driving system (108), in manual driving mode.

2. Vehicle (100; 300) according to claim 1, **characterized in that** the autonomous driving system (108) is configured to enter a piece of predetermined identification data into each of the driving instructions sent therefrom, the driving mode control unit (112) being configured to send:
- a request to take into account the instructions comprising said identification data, in order to activate the autonomous driving mode; and
- a request to disregard the instructions comprising said identification data, in order to deactivate the autonomous driving mode.

3. Vehicle (200) according to claim 1, **characterized in that** the autonomous driving system (108) is connected to the communication bus (102) via the driving mode control unit (112), said driving mode control unit being configured to:
- authorize the passing of the driving instructions sent by said autonomous driving system (108) to the communication bus (102), in order to activate the autonomous mode; and
- block the passing of the driving instructions sent by said autonomous driving system (108) to the communication bus (102), in order to deactivate the autonomous mode.

4. Vehicle (100; 200; 300) according to any one of the preceding claims, **characterized in that** it comprises a manual driving mode selector, the driving mode control unit (112) being configured to activate or deactivate the autonomous driving mode on the basis of the state of said selector.

5. Vehicle (100; 200; 300) according to any one of the preceding claims, **characterized in that** the driving mode control unit (112) is configured to deactivate the autonomous driving mode upon detection of at least one of the following conditions:
- application of a force, greater than a predetermined threshold, to a steering wheel of said vehicle;
- application of braking to a brake pedal of said vehicle;
- activation of a parking brake of said vehicle; and
- non-detection of a presence on a driver's seat.

6. Vehicle (100; 200; 300) according to claim 4, **characterized in that** the driving mode control unit (112) is configured to activate the autonomous driving mode upon detection of all of the following conditions:
- vehicle speed of zero;
- detection of a presence on a driver's seat;
- parking brake of said vehicle activated; and
- driving mode selector set to autonomous driving mode.

7. Vehicle (300) according to any one of the preceding claims,
**characterized in that** it comprises an interface (302) for connecting a manual driving device, such as a lever or joystick, to the communication bus (102) of said vehicle (300), in order to drive said vehicle in a so-called remote driving mode;
the driving mode control unit (112) being further configured to inhibit the driving instructions sent by said manual driving device, in manual driving mode or in autonomous driving mode.

8. Vehicle (300) according to claim 7, **characterized in that** it comprises a manual switch for selecting, or not selecting, the remote driving mode, the driving mode control unit (112) being configured to activate or deactivate the remote driving mode on the basis of the state of said switch.

9. Vehicle (300) according to claim 8, **characterized in that** the driving mode control unit (112) is configured to activate the remote driving mode when:
- the autonomous driving mode is active, and
- the manual switch is in the remote driving mode position.

10. Vehicle (100; 200; 300) according to any one of the preceding claims, **characterized in that** it is a land-based public transport vehicle, of the bus or coach type, in particular an electric vehicle.

11. Method for managing a driving mode in a vehicle (100; 200; 300) that can be selectively driven in:
- a mode for manual driving by a driver,
- a mode for autonomous driving by an on-board autonomous driving system (108) sending driving instructions to at least one component (104) of a rolling base (106) of said vehicle (100; 200; 300) via a digital communication bus (102), said autonomous driving system (108) remaining functional and continuing to send driving instructions in manual driving mode, and
**characterized in that** said method comprises inhibiting, by means of a driving mode control unit (112), the driving instructions sent by said autonomous driving system (108), in manual driving mode.

12. Method according to the preceding claim, **characterized in that** the driving instructions sent by the autonomous driving system (108) can be inhibited by:
- blocking the passing of said instructions to a communication bus (102) of the vehicle (200); and
- sending a request to disregard said instructions, said instructions comprising a piece of identification data allowing them to be identified.

13. Method according to any one of claims 11 or 12, **characterized in that** said vehicle (300) can also be driven, in a so-called remote driving mode, by a driving device which is connected, in particular removably, to the communication bus (102) of said vehicle (300) by means of a connection interface (302) of said vehicle, said method further comprising inhibiting, by means of the driving mode control unit (112), the driving instructions sent by said remote driving device, in manual driving mode or in autonomous driving mode.
